# EUROPEAN PATENT APPLICATION

(11) **EP 0 965 410 A2**
(43) Date of publication of application: **22.12.1999**
(21) Application number: 99303537.7
(22) Date of filing: 06.05.1999
(51) Int. Cl.: B23K 9/28

(54) **Welding shroud and method of manufacture**

(30) Priority: 06.05.1998 GB 9809528
(71) Applicant: Warren, Raymond, Brierley Hill, West Midlands DY5 4TW (GB)
(72) Inventor: Warren, Raymond, Brierley Hill, West Midlands DY5 4TW (GB)
(74) Representative: Jackson, Derek Charles

(57) **Abstract**

An electric arc-welding shroud incorporates a high-temperature-resistant metal (3), such as titanium, zirconium or hafnium and alloys thereof, having an oxide coating formed from the metal on at least a part of the surface thereof. The shroud is made by forming at least part of the shroud of the high-temperature-resistant metal and treating at least the part of the shroud so as to form an oxide coating of the metal on at least a portion thereof.

## Description

This invention relates to a welding shroud for electric arc-welding and to a method of manufacturing such a welding shroud.

Welding shrouds, such as CO₂ welding shrouds, for electric arc-welding are generally made of copper. However, welding shrouds are exposed a harsh environment including high temperatures which give rise to oxidation, mechanical abrasion and spatter from the welding operation which bonds to the copper at the nozzle end of the shroud and can give rise to arcing between the electrode and the end of the shroud.

A particular problem is the affinity the weld spatter has for copper. The weld spatter builds up at the nozzle end of the shroud and bonds to the copper thus preventing its removal without damaging the shroud.

The effect of the harsh environment is that known welding shrouds have a short service life and require to be discarded and replaced regularly with attendant high costs.

It is therefore an object of the present invention to provide a welding shroud for electric arc-welding which minimises the above problems and a method for manufacturing such a welding shroud.

According to one aspect of the present invention there is provided an electric arc-welding shroud incorporating a high-temperature-resistant metal having an oxide coating formed from the metal on at least a part of the surface thereof.

According to another aspect of the present invention there is provided a method of manufacturing an electric arc-welding shroud comprising the steps of forming at least part of the shroud of a high-temperature-resistant metal and treating at least the part of the shroud so as to form an oxide coating of the metal on at least a portion thereof.

The high-temperature-resistant metal may be selected from an element from Group IVA of the Periodic Table and alloys thereof. The high-temperature-resistant metal may comprise titanium, such as ASTM Grade 2 titanium.

The shroud may incorporate a further metal dissimilar to the high-temperature-resistant metal, such as copper.

The high-temperature-resistant metal may be in the form of a first tube and the further metal may be in the form of a second tube. The first tube may be secured to the second tube. The first and second tubes may be coaxial, for example with the first tube extending at least partly within the second tube. The first tube may extend axially beyond the second tube in a nozzle region of the shroud. The first tube may extend radially outwardly to cover at least a part of an end face of the second tube where the first tube extends axially beyond the second tube. The outer surface of the first tube may be bevelled in the region where the first tube extends axially beyond the second tube. The first tube may extend within the second tube along part of the length of the second tube. The end of the first tube within the second tube may be internally bevelled.

The oxide coating may be formed by heat treatment in an oxidising atmosphere. Only the high-temperature-resistant part need be subjected to heat treatment. At least the high-temperature-resistant part of the shroud may be heated to a temperature in the range from 650 to 730 °C, preferably in the range from 680 to 730 °C. At least the high-temperature-resistant part of the shroud may be heated for about 1 to 2 minutes, preferably about 1.5 minutes. At least the high-temperature-resistant part of the shroud may be heated in an oxypropane or oxyacetylene flame or in an oven.

Alternatively, the oxide coating may be formed chemically, such as by anodisation.

For a better understanding of the present invention and to show more clearly how it may be carried into effect reference will now be made, by way of example, to the accompanying drawings in which:
Figure 1 is a cross-sectional view through one embodiment of a welding shroud according to the present invention;
Figure 2 is a cross-sectional view illustrating one way in which an inner tube of the welding shroud shown in Figure 1 can be made;
Figure 3 is a partial cross-sectional view of one embodiment of an electric arc-welding torch incorporating the welding shroud of Figure 1;
Figure 4 is a partial cross-sectional view of part of another embodiment of an arc-welding torch incorporating the welding shroud of Figure 1; and
Figure 5 is a partial cross-sectional view of part of a further embodiment of an arc-welding torch incorporating the welding shroud of Figure 1.

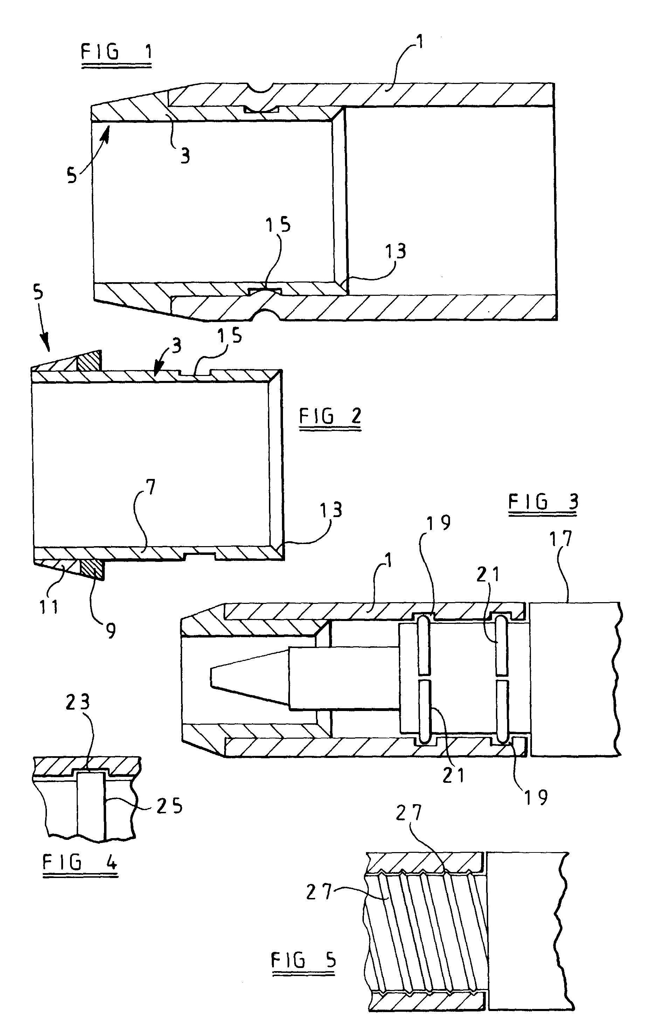

The welding shroud shown in Figure 1 comprises two coaxial tubes in the form of an outer tube 1 and an inner tube 3. The outer tube 1 is made of copper or any other suitable material, although copper is preferred because of its high thermal conductivity which enables the metal to conduct heat rapidly away from the region of the nozzle of the shroud. The inner tube 3 extends from the nozzle end of the shroud and partially along and within the length of the outer tube 1. At the nozzle end of the shroud the inner tube 3 protrudes axially beyond the outer tube 1 and also protrudes radially outwardly to cover the end face of the outer tube 1.

The inner tube is made of a material different to that of the outer tube and is preferably made of a high-temperature-resistant metal which, when heat-treated, for example in air, forms an oxide layer that has no affinity for the spatter material caused by an electric arc-welding operation. Suitable metals are those from Group IVA of the Periodic Table, that is, titanium, zirconium and hafnium together with alloys of titanium, zirconium and hafnium.

Titanium and titanium alloys (especially aluminium, manganese, tin or vanadium) are noted for their ability to form a tenacious oxide coating and can also be anodised to form an oxide layer.

Zirconium also forms a tenacious oxide scale when heated in air and can be alloyed for example with small amounts of tin, chromium and nickel also copper and magnesium.

The preferred material for the inner tube 3 is ASTM Grade 2 titanium which has the following composition:
nitrogen up to 0.03 weight percent
carbon up to 0.10 weight percent
hydrogen up to 0.015 weight percent
iron up to 0.30 weight percent
oxygen up to 0.25 wt percent
other elements up to 0.30 weight percent (of which each other element is up to 0.05 weight percent) balance titanium.

ASTM Grade 2 titanium provides a cost-effective balance between cost and service life.

The inner tube 3 is provided with a nozzle portion 5 that is frustoconical in shape. One way in which such a frustoconical shape can be made is illustrated in Figure 2 which shows a tube 7 having a collar 9, of the same material as the tube 7, secured to the tube 7, for example by TIG welding, and a fillet 11 of weld material, again of substantially the same material as the tube 7, fusion welded using a suitable filler wire and a TIG welding process. Indeed, the collar 9 may be secured at the same time the fillet 11 is created. The nozzle portion 5 can then be profiled in a lathe or the like. If desired, a layer of a further high-temperature-resistant metal or other suitable high-temperature-resistant material may be applied to the end of the nozzle portion 5. For example a layer of zirconium may be applied to an inner tube 3 of titanium or titanium alloy, the layer being up to about 2 mm thick and extending along the external frustoconical surface of the nozzle portion for a distance of up to about 4 mm.

However, it should be noted the inner tube 3 can be made in other ways, including hot working (forging) using well known techniques.

The other end of the inner tube 3 is formed with an outwardly bevelled portion 13 (that is, the radially outer region of the inner tube is axially longer than the radially inner region thereof) which serves to increase the flow rate of inert gas (such as carbon dioxide) through the shroud to help reduce the temperature.

The inner tube 3 is provided intermediate the nozzle portion 5 and the bevelled portion 13 with a peripheral recess 15 around the circumference of the outer surface of the tube, the purpose of which will be explained in more detail hereinafter. If desired, more than one peripheral recess may be provided.

After the inner tube has been positioned within the outer tube, the inner tube is secured to the outer tube by a rolling operation in which pressure is applied to the outer surface of the outer tube so as to deform material from the inner surface of the outer tube into the recess 15 around the periphery of the inner tube. Deformation of the material of the outer tube into the peripheral recess 15 of the inner tube creates a gas tight joint between the two tubes, while permitting differential expansion. Pressure may be applied, for example, by a rotatable mechanical member or by an hydraulic mechanism. Lateral displacement of the material of the outer tube tends to reduce the overall length of the outer tube and can lead to the end of the outer tube 1 pulling away from the nozzle portion of the inner tube. To counteract this tendency pressure is preferably additionally applied in the region of the junction between the end of the outer tube and the axially adjacent part of the nozzle portion 5 to ensure a close fit between the outer tube and the nozzle portion of the inner tube. For example, for a peripheral recess having an axial dimension of about 3.25 mm and a depth of about 1.25 mm, a rotatable mechanical or hydraulic roller may be used having, for example, a diameter of about 18 mm and an axial dimension of about 2 mm. A second peripheral recess reduces the likelihood of leakage as a result of damage to the seal following contact between the shroud and other components.

Alternative means (not illustrated) for securing the inner tube to the outer tube may be employed. For example, the outer tube 1 may be provided with an internal thread and the inner tube 3 may be provided with an external thread and the two tubes may be secured together simply by threading the inner tube into the outer tube. As a further alternative, the outer and inner tubes may be made as a single component made of a suitable high-temperature-resistant metal such as titanium, zirconium or hafnium or an alloy of titanium, zirconium or hafnium.

Prior to insertion of the inner tube 3 into the outer tube 1 to form the welding shroud, the inner tube is heated, for example to a bright red heat (that is, to a temperature in the range from 650 to 730 °C, preferably from 680 to 730 °C) for a time of about 1 to 2 minutes, preferably about 1.5 minutes, with either an oxypropane or an oxyacetylene torch having an oxidising flame to allow the exposed surfaces of the inner tube 3 to absorb carbonaceous gases and oxygen and to form an oxide layer on the exposed surface of the inner tube. The effect of the heat treatment additionally results in surface hardening of the inner tube, reduced ductility and increased strength. Any loose oxide is removed with a wire brush or the like to leave, in the case of titanium, a dull grey oxide surface. As explained above, the oxides of titanium, zirconium and hafnium adhere tenaciously to the underlying metal and provide a coating to which weld spatter has no affinity. It is therefore relatively easy for an operative to remove weld spatter from the welding shroud from time to time without causing any significant damage to the shroud. Removal of the spatter is effected more easily if the nozzle end and internal surface of the inner tube 3 are relatively smooth in order not to give the spatter an opportunity to key into the inner tube. It is believed that the spatter material, which is generally iron based, assists in maintaining the oxide layer at the nozzle end of the inner tube. Titanium, zirconium and hafnium metals are also non-magnetic which helps to minimise arc wander and plasma deflection. Alternatively, in suitable circumstances the welding shroud as a whole can be heat treated.

As an alternative to flame oxidation, the inner tube or the entire welding shroud may be heat treated in air or an oxidising atmosphere in a gas or electric oven or by induction heating at a temperature in the range from 650 to 730 °C, preferably from 680 to 730 °C, and for a time of about 1 to 2 minutes, preferably about 1.5 minutes.

The material of the inner tube continues to oxidise slowly during use so as to maintain a continuous oxide layer thus providing a long service life for the shroud.

The oxide layer on the inner surface of the inner tube tends to reflect incident radiation, thereby reducing undesired heating of the shroud. Additionally, the copper outer tube demonstrates high thermal conductivity serves to conduct heat efficiently away from the region of the nozzle.

It should be noted the heat treatment described above is contrary to accepted practice when fabricating reactive metals such as titanium, zirconium and hafnium and their alloys. Previously, it has generally been believed to be essential to exclude oxygen and iron when fabricating such materials.

Figure 3 illustrates one means by which the welding shroud can be attached to an arc-welding torch 17. In the illustrated embodiment, the internal surface of the outer tube 1 is provided with two axially spaced recesses 19 extending around the internal circumference of the tube. A circlip 21, for example of spring steel, having a substantially circular cross-section, is located in each of the recesses and serves to secure the shroud to the remainder of the welding torch by means of friction.

The partial cross-sectional view shown in Figure 4 corresponds to part of the view shown in Figure 3. However, in Figure 4 the two axially spaced recesses are replaced by a single recess 23 of greater axial extent and the two circlips are replaced by a single circlip 25 of substantially rectangular cross-section, the greater dimension of the rectangle extending in the axial direction of the outer tube.

The partial cross-sectional view shown in Figure 5 corresponds to part of the view shown in Figure 3. However, in Figure 5 the two axially spaced recesses and circlips are replaced by a relatively coarse thread 27 formed on each of the shroud and the remainder of the torch.

In one specific embodiment of the invention the outer tube 1 has an axial length of 59 mm, an external diameter of 25.5 mm and an internal diameter of 21 mm. The inner tube 3 has an axial length of 25 mm, an external diameter of 21 mm and an internal diameter of 16 mm which allows sufficient wall thickness to allow for wear as a result of the slow oxidation and for metal depletion resulting from spatter. The nozzle portion extends 7 mm beyond the end of the outer tube giving an overall length of 66 mm and the external frustoconical surface extends at an angle of substantially 20 degrees to the axis of the tube to allow for welding access and to facilitate machining of the nozzle portion. The angle of the frustoconical surface also creates an annular land area on the end of the nozzle portion have a radial dimension of 1 mm. The maximum external diameter of the nozzle portion is about 25 mm. The frustoconical surface additionally extends over part of the outer tube 1, the entire axial length of the frustoconical surface being about 7 mm. That end of the inner tube 3 remote from the nozzle portion may be angled at about 45 degrees to the axis. The peripheral recess 15 has an axial dimension of about 3.25 mm and a depth of about 1.25 mm. Where one peripheral recess is provided the mid-point of this may be about 18 mm from the nozzle end of the inner tube 3. Where a second peripheral recess is provided the mid-point of this may be about 12 mm from the nozzle end of the inner tube.

With such a welding shroud the end of the welding tip is advantageously positioned about 4 mm within the nozzle end of the shroud with the result that the nozzle end of the shroud surrounds or covers the area of the weld being formed. The inner tube has the effect of reflecting radiant heat and deflecting spatter and, due to the high-temperature-resistant nature of the material of the inner tube, is able to operate at the high temperatures encountered in welding environments with relatively little risk of damage.

## Claims

1. An electric arc-welding shroud incorporating a high-temperature-resistant metal (3) having an oxide coating formed from the metal on at least a part of the surface thereof.

2. An electric arc-welding shroud as claimed in claim 1, characterised in that the high-temperature-resistant metal (3) is selected from an element from Group IVA of the Periodic Table and alloys thereof.

3. An electric arc-welding shroud as claimed in claim 2, characterised in that the high-temperature-resistant metal (3) comprises titanium, such as ASTM Grade 2 titanium.

4. An electric arc-welding shroud as claimed in any preceding claim, characterised in that the shroud incorporates a further metal (1) dissimilar to the high-temperature-resistant metal, such as copper.

5. An electric arc-welding shroud as claimed in claim 4, characterised in that the high-temperature-resistant metal is in the form of a first tube (3) and the further metal is in the form of a second tube (1), the first tube optionally being secured to the second tube.

6. An electric arc-welding shroud as claimed in claim 5, characterised in that the first tube (3) and the second tube (1) are coaxial.

7. An electric arc-welding shroud as claimed in claim 6, characterised in that the first tube (3) extends at least partly within the second tube (1), in particular the first tube extending axially beyond the second tube in a nozzle region (5) of the shroud.

8. An electric arc-welding shroud as claimed in claim 7, characterised in that the first tube (3) extends radially outwardly to cover at least part of an end face of the second tube (1) where the first tube extends axially beyond the second tube, the outer surface of the first tube optionally being bevelled in the region where the first tube extends axially beyond the second tube.

9. An electric arc-welding shroud as claimed in any one of claims 6 to 8, characterised in that the first tube (3) extends within the second tube (1) along part of the length of the second tube, the end of the first tube within the second tube optionally being internally bevelled.

10. A method of manufacturing an electric arc-welding shroud comprising the steps of forming at least part of the shroud of a high-temperature-resistant metal (3) and treating at least the part of the shroud so as to form an oxide coating of the metal on at least a portion thereof.

11. A method according to claim 10, characterised in that the high-temperature-resistant metal (3) is selected from an element from Group IVA of the Periodic Table and alloys thereof.

12. A method according to claim 11, characterised in that the high-temperature-resistant metal (3) comprises titanium, such as ASTM Grade 2 titanium.

13. A method as claimed in any one of claims 10 to 12, characterised in that at least a further part of the shroud is made of a dissimilar metal (1), such as copper.

14. A method according to claim 13, characterised in that the heat-resistant metal is in the form of a first tube (3) and the further part is in the form of a second tube (1), the first tube optionally being secured to the second tube.

15. A method according to claim 14, characterised in that the first and second tubes (3, 1) are coaxial.

16. A method according to claim 15, characterised in that the first tube (3) extends at least partly within the second tube (1), in particular the first tube extending axially beyond the second tube in a nozzle region of the shroud.

17. A method according to claim 16, characterised in that the first tube (3) extends radially outwardly to cover at least a part of an end face of the second tube (1) where the first tube extends axially beyond the second tube, the first tube optionally being bevelled in the region where the first tube extends axially beyond the second tube.

18. A method according to any one of claims 15 to 17, characterised in that the first tube (3) extends within the second tube (1) along part of the length of the second tube, the end of the first tube within the second tube optionally being internally bevelled.

19. A method according to any one of claims 10 to 18, characterised in that the oxide coating is formed by heat treatment in an oxidising atmosphere, for example only the high-temperature-resistant part of the shroud being heated in the oxidising atmosphere.

20. A method according to claim 19, characterised in that at least the high-temperature-resistant part of the shroud is heated to a temperature in the range from 650 to 730 °C, preferably in the range from 680 to 730 °C.

21. A method according to claim 19 or 20, characterised in that at least the high-temperature-resistant part of the shroud is heated for about 1 to 2 minutes, preferably about 1.5 minutes.

22. A method according to any one of claims 19 to 21, characterised in that at least the high-temperature-resistant part (3) of the shroud is heated in an oxypropane or oxyacetylene flame or in an oven.

23. A method according to any one of claims 10 to 18, characterised in that the oxide coating is formed chemically, such as by anodisation.
